# EUROPEAN PATENT SPECIFICATION

(11) **EP 3 541 661 B1**
(45) Date of publication and mention of the grant of the patent: **16.11.2022**
(21) Application number: 17798314.5
(22) Date of filing: 03.10.2017
(51) Int. Cl.: B60Q 1/30, B60Q 1/44, F21S 43/14, F21S 43/145, F21S 43/15, F21S 43/237, F21S 43/239, F21S 43/241, F21S 43/251, F21S 43/249, F21S 43/243, F21S 43/245, F21S 43/31, F21S 43/33, F21S 43/40

(54) **ADDITIONAL BRAKE LIGHT FOR REAR VEHICLE WINDOW HAVING LIGHT GUIDES**
ZUSATZ-BREMSLEUCHTE FÜR KFZ-HECKSCHEIBE MIT LICHTLEITERN
FEU DE STOP ADDITIONNEL POUR VITRE ARRIÈRE D'UN VÉHICULE COMPRENANT DES GUIDES DE LUMIÈRE

(30) Priority: 14.10.2016 SI 201600254
(43) Date of publication of application: 25.09.2019
(73) Proprietor: HELLA GmbH & Co. KGaA, 59557 Lippstadt (DE)
(72) Inventor: BABNIK, Blaz, Grosuplje (SI); VIRSEK, Marko, 1290 Grosuplje (SI); TEKAVCIC, Andraz, 1000 Ljubljana (SI); WAGNER, Andrej, 1000 Ljubljana (SI)
(86) International application number: PCT/IB2017/056077
(87) International publication number: WO 2018/069792

(56) References cited:
- EP-A1- 0 452 815
- EP-A2- 2 354 637
- JP-A- 2011 222 377
- US-A- 5 101 193
- US-A- 5 347 435

## Description

The present invention concerns an additional brake light of a motor vehicle according to the preamble of claim 1.

Additional brake light, also known as the third brake light, is used on motor vehicles in order to warn other participants in road traffic which have partially blocked view to the left and right brake light of the vehicle.

An additional brake light of the aforementioned type is known from US 5 347 435 A. In this document is disclosed how to represent an additional brake light by means of a hologram so that no or just small amount of additional equipment is to be installed in the rear window section, whereby the driver's field of vision is substantially increased. However, the disclosed solution requires a relatively complex and intricate optics.

Moreover, it is disclosed in the document DE 10 2011 012 520 A1 that the third brake light is formed in a manner to comprise at least one light source and at least one holographic element, whereby the holographic element is configured to refract and/or mirror light beams travelling from the light source.

Another additional brake light of a motor vehicle is known from US 5 101 193 A. The brake light described therein comprises a light source, a hologram and transparent prism for supporting the hologram and for guiding the light of the light source to the hologram. The prism with the hologram is mounted in front of the rear window of a vehicle with the light source beneath the surface of the rear panel that is adjacent the rear window.

EP 2 354 637 A2 describes a rear light for a motor vehicle in which a series of light-emitting diodes (LEDs) is provided as the light source. The light from the light-emitting diodes enters a light guide through an entry surface, which splits into two differently shaped parts at a distance from the entry surface. The light of the light-emitting diodes emerges from the two parts during operation of the rear light. In this case, the same lighting function is assigned to each of the two parts.

EP 0 452 815 A1 describes a brake light for a motor vehicle in which a hologram is arranged on the rear window of the vehicle. The light emitted by a light source is coupled into the rear window via a light guide and a prism. In the rear window, the light moves to the hologram and enters the hologram from the rear window.

Therefore, known solutions are limited only to the additional brake light and, respectively, to the use of a hologram as the additional brake light, and does not allow any additional function.

It is the object of the present invention to create an additional brake light of the type mentioned above which in addition to its basic optical function i.e. creating a warning light signal in order to inform the driver in the rear about the braking also provides at least one additional lighting function.

This is achieved, in accordance with the invention, by means of a headlamp of the aforementioned kind with the characterizing features of claim 1. The subclaims concern preferred forms of the invention.

Claim 1 provides that
the light guide is formed in a cross-section as a dual leg element in the sense of the letter L, wherein a first leg thereof when mounted in the vehicle is a vertical leg and located approximately in the plane of said rear glass of the vehicle, and wherein a second leg thereof when mounted in the vehicle is a horizontal leg which is associated with a second end of the first leg and located approximately horizontally, respectively, approximately in parallel with the plane of the road surface the vehicle drives over, and wherein said first leg is formed at the first end thereof with an entry surface, and said second leg is formed at the free end thereof with an exit surface, that
a first light source is arranged in the immediate vicinity of said entry surface of the light guide, so that the light beam from the light source enters through the entry surface into the light guide and afterwards, travels along the legs pursuant to the total internal reflection, and exits through the exit surface performing a primary optical function of the brake light, and that
□said optical element provided on at least one flat side of at least one of the legs of the light guide can be lit by means of a second light source to perform a second optical function of the brake light.

Additional brake light, also known as the third brake light according to the invention aggregates several optical functions in a single optical system. The first optical function represents an additional brake light, for example, whereas the second optical function can be represented as an emergency light warning about the danger, lighting of the surrounding, display of various information and similar, and an arbitrary combination thereof. It is possible according to the present invention for at least one optical function to be active, if needed, however, it is possible to simultaneously activate several optical functions. Each optical function separately creates a required light distribution by means of the same optical system such as a thick-wall optical guide, at least one hologram being arranged thereon. Furthermore, it is provided for that each optical function utilises at least one section of said thick-wall optical guide or an arbitrary combination of sections of said light guide.

The invention is further described in detail by way of non-limiting embodiment, and with a reference to the accompanying drawings, where
Fig. 1 shows a back view of a motor vehicle;
Fig. 2 shows an enlarged view of an additional brake light according to the invention in a sectional view along the longitudinal vertical plane of the vehicle of Fig. 1;

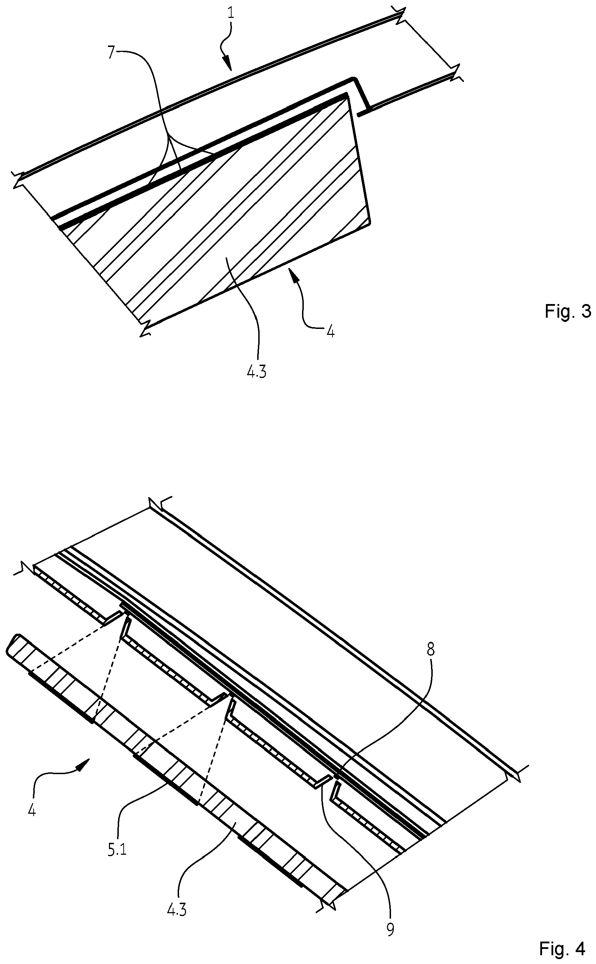

Fig. 3 shows a sectional view of the additional brake light along the line **III-III** of Fig. 2;
Fig. 4 shows a sectional view of the additional brake light along the line **IV-IV** of Fig. 2;
Fig. 5 shows a three-dimensional view of the additional brake light of Fig. 2;
Fig. 6 shows a three-dimensional view of a second embodiment of an additional brake light which is not covered by the invention.

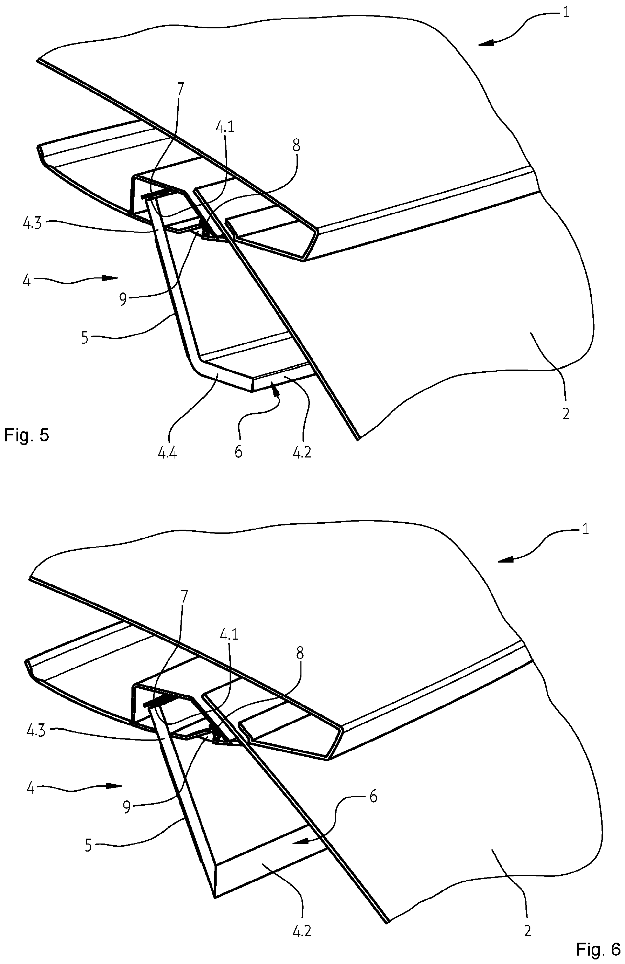

The embodiment illustrated in Fig. 6 does not show a brake light according to the invention and is present in the description for illustration purposes only.

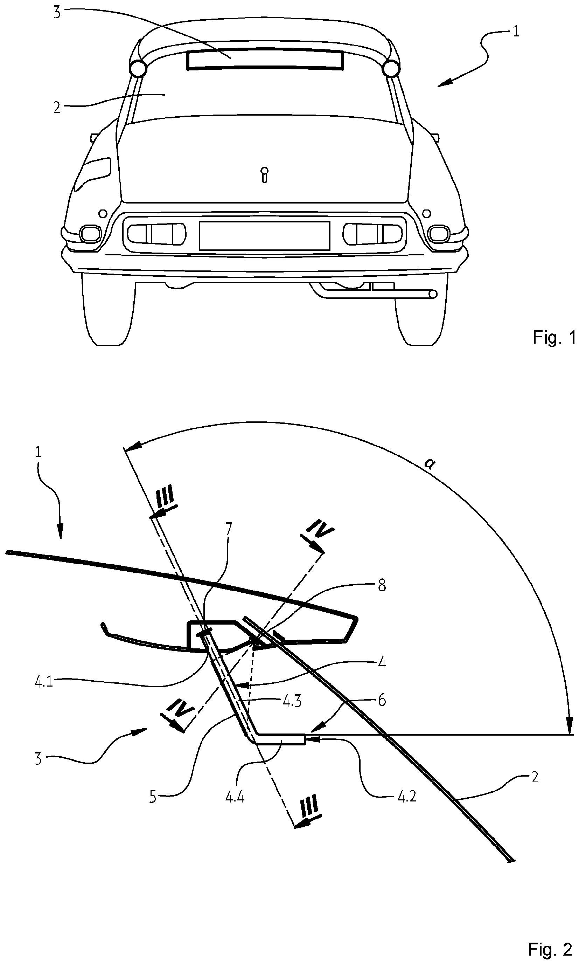

Fig. 1 shows a motor vehicle 1 comprising an additional brake light 3 arranged in the area of the back thereof, preferably in the area of the rear glass 2. Said additional brake light 3 is formed as a thick-wall light guide 4 with at least one optical element 5, 6 arranged thereon, and comprises at least one light source 7, 8 to which a primary optical element can optionally be attached, such as a lens to improve directing of the light beams. With the present embodiment, said light guide 4 is formed as a flat light guide.

It is provided for according to one of the possible embodiments of the thick-wall light guide 4 (Fig. 2) that the light guide 4, viewed in transversal direction of the vehicle 1, at least partially extends over the rear glass 2 and comprises an entry surface 4.1 and an exit surface 4.2. Said entry surface 4.1 at least approximately faces the roof of the vehicle 1, whereas said exit surface 4.2 at least approximately faces the direction opposite the vehicle 1 driving direction. The light guide 4 is formed in the cross-section as a dual leg element in the sense of the letter L. The first leg that is the vertical leg 4.3 of the light guide 4 is located approximately in the plane of said rear glass 2 of the vehicle 1 and is attached inside the vehicle 1 with its the first end to the roof of the vehicle, for example. The second leg that is the horizontal leg 4.4 which is associated with the second end of the first leg 4.3 is located approximately horizontally and, respectively, approximately in parallel with the plane of the road surface the vehicle 1 drives over. In the present embodiment, said first leg 4.3 is formed at the first end thereof with the entry surface 4.1 extending approximately perpendicularly to the extension of the first leg 4.3, whereas said second leg 4.4 is formed at the fee end thereof, that is the end averted from the connection with the first leg 4.3, with the exit surface 4.2. It is provided for according to the present invention that said first leg 4.3 can be inclined with regard to the vertical for an angle in the range of about ±30°, and/or that said second leg 4.4 can be inclined with regard to the horizontal for an angle in the range of about ±30°. Said first leg 4.3 and said second leg 4.4 of the light guide 4 are typically interconnected so that the internal angle α thereof preferably lies in the range of the obtuse angle.

At least one optical element 5 is provided on at least one flat side of at least one of the legs 4.3, 4.4 of the light guide 4, preferably at the first, vertical leg 4.3 of the light guide 4, when viewed in transversal direction of the vehicle 1 and, respectively, in longitudinal direction of the light guide 4. Said at least one optical element 5 is provided at the flat side of the vertical leg 4.3 of the light guide 4 which is averted from the rear glass 2 of the vehicle 1. Optionally, at least one additional optical element 6 is provided on said exit surface 4.2 of the light guide 4. According to the present invention, said optical elements 5, 6 are formed as a holographic film which is attached by means of an adhesive agent for example to the respective surface of the light guide 4. Furthermore, the optical elements 5, 6 can be formed either as usual prismatic and/or lens optical element and/or as an etched structure and/or by use of different material (a diffusion material for example) by means of two-component injection technology and similar and the combination of the aforementioned. Moreover, at least one of the optical elements 5, 6 can be formed in a manner that it extends continuously over the entire length of the light guide 4. It is provided for according to one of the possible and particularly preferred embodiments that at least one of the optical elements 5, 6 is formed in a manner that it extends intermittently at least over a part of the length of the light guide 4. In the latter case, said optical element 5 is provided as a plurality of mutually more or less equally spaced sections 5.1 of the optical element. In addition, at least one of the optical elements 5, 6 can be formed in a manner to emit multi colour light.

A second embodiment of a thick-wall light guide 4, which is not part of the invention, is shown in Fig. 6. With this example, the second leg 4.4 is absent and said exit surface 4.2 is provided at the free end of the vertical leg 4.3 of the light guide 4. With said second embodiment, the exit surface 4.2 can be formed as a inclined surface extending under an angle with regard to the extension of the vertical leg 4.3, whereby said inclined surface mostly faces the rear glass 2 of the vehicle 1.

In the immediate vicinity of said entry surface 4.1 of the light guide 4 is arranged a first light source 7 provided preferably to perform a primary optical function of the brake light 3 that is to warn a driver behind about breaking. Said light source 7 is preferably, but not limited to, selected as at least one light emitting diode (LED), preferably a plurality LED, arranged more or less equally along the light guide 4. Here, said light source 7 is arranged with regard to the light guide 4 in a sense for the light beam(s) from the light source 7 and, respectively, from each LED directly hit(s) said entry surface 4.1. The light beam(s) from said light source 7 and, respectively, from each LED enter(s) through the entry surface 4.1 into the light guide 4 and, afterwards, travel(s) along the legs 4.3, 4.4 pursuant to the total internal reflection, and exit(s) through the exit surface 4.2. It is possible, of course, that said light source 7 in addition to performing said primary optical function of the brake light 2 can also perform arbitrary additional optical functions that can be controlled in a manner known per se by means of a control unit not shown.

Further is provided according to the invention that said optical element 5, which is provided on at least one flat side of at least one leg 4.3, 4.4 of the light guide 4 and preferably on the first that is the vertical leg 4.3 of the light guide 4, can be illuminated by means of a second light source 8. Said light source 8 is preferably, but not limited to, selected as at least one LED, preferably a plurality LED, arranged more or less equally along the light guide 4. Here, each said light source 8 is arranged with regard to the light guide 4 and, respectively, with regard to each optical element 5 in a sense for the light beam(s) from the light source 8 and, respectively, from each LED directly hit(s) said optical element 5 and, respectively, each said section 5.1 of the optical element 5. According to the present invention said feature is achieved by each LED of the light source 8 to be surrounded with light reflecting inclined walls 9 in a sense of a screen on all sides except the side facing the said optical element 5 and, respectively, facing each said section 5.1 of the optical element 5. Said walls 9 are formed in a manner that they divergently extend away from each other in direction from LED toward the optical element 5 and, respectively, the section 5.1 of said optical element, so that light beam(s) from each LED of the light source 8 fall solely to the area of the section 5.1 of said optical element, whereby beam(s) from each neighbouring LED of the light source 8 do not interfere with each other.

The optical element 5 and, respectively, the plurality of sections 5.1 of the optical element is intended to perform various optical functions. Thus, for instance, a function of an emergency brake light is provided in a case of danger which operates so that the required light distribution is generated by the optical element 5 and, respectively, each section 5.1 of the optical element on the surface of the leg 4.3 of the light guide 4 where the optical element 5 and, respectively, the section 5.1 of the optical element is designed to be. The light beam(s) from the second light source 8 and, respectively, from each LED of the second light source 8 fall(s) directly through the surface of the leg 4.3, which is located close to the light source 8, onto the optical element 5 and, respectively, onto each section 5.1 of said optical element provided on the surface of the leg 4.3, which is remote with regard to the light source 8. Afterwards, the light beam(s) reflect(s) from the optical element 5 and, respectively, from each section 5.1 of the optical element, and exit(s) pursuant to the total internal reflection in direction approximately perpendicular to the leg 4.3 of the light guide 4 and, respectively, in direction towards the rear glass 2 of the vehicle 1. It is possible, of course, that said light source 8 in addition to performing said optical function of warning about the danger can also perform arbitrary additional optical functions that can be controlled in a manner known per se by means of a control unit not shown.

Several examples of operating of the additional brake light according to the invention is represented in the continuation without any limitations whatsoever.

### Example 1:

None of the functions is active. The thick-wall light guide 4 is completely transparent in the area of the vertical leg 4.3 with the completely transparent optical element 5. Optionally, the thick-wall light guide 4 is also completely transparent in the area of the exit surface 4.2.

### Example 2:

Only one function is active such as the brake light for instance. The thick-wall light guide 4 is transparent in the area of the vertical leg 4.3 with the completely transparent optical element 5. The exit surface 4.2 is lit and generates required light distribution such as an additional brake light for instance.

### Example 3:

Only one function is active such as an emergency brake light for instance. The area of the vertical leg 4.3 with entirely transparent optical element 5 is lit and generates required optical distribution such as an emergency brake light. The exit surface 4.2 is not lit.

### Example 4:

Two functions are active. The area of the vertical leg 4.3 with the optical element 5 and the exit surface 4.2 are lit and each of them generates required light distribution for its own function.

### Example 5:

Only one function is active. The area of the vertical leg 4.3 with the optical element 5 and the exit surface 4.2 are lit, and together they generate required light distribution for only one function.

Obviously, it is possible that based on the above disclosed embodiments of the additional brake light 3 and the use thereof various alternatives can be created without departing from the spirit of the invention. For example, the light source 8 for lighting of the optical element 5 and, respectively, the plurality of sections 5.1 of the optical element can be arranged in front of the optical element 5 and, respectively, the plurality of sections 5.1, or behind it. Also, the additional brake light 3 can be arranged anywhere in and, respectively, on the vehicle 1 such as inside the vehicle 1 just below the roof, in the area above the boot shelf and similar. Moreover, the hologram can be provided as a monochromatic or polychromatic volume hologram, or as a monochromatic or polychromatic surface hologram, or the combination thereof. Furthermore, an embodiment is possible where the light beam(s) from LED at least partially overlap, thus, obtaining an additional optical effect on the optical element 5 and, respectively, on the plurality of sections 5.1 of the optical element.

## Claims

1. Additional brake light of a motor vehicle for being arranged in the area of the rear of the vehicle (1), preferably in the area of the rear glass (2) of the vehicle (1), wherein an additional brake light (3) is formed as a thick-wall light guide (4) with at least one optical element (5, 6) arranged thereon and comprising at least one light source (7, 8), wherein the light guide (4) comprises an entry surface (4.1), which when mounted in the vehicle (1) at least approximately faces a roof of the vehicle (1), and an exit surface (4.2), which at least approximately faces the direction opposite to the driving direction of the vehicle (1), wherein the light guide (4) comprises two legs (4.3, 4.4), wherein at least one of the legs (4.3, 4.4) comprises at least one flat side, wherein the optical element (5) is provided on the at least one flat side of at least one of the legs (4.3, 4.4) of the light guide (4), and is formed as a holographic film (5), **characterised in that**
- the light guide (4) is formed in a cross-section as a dual leg element in the sense of the letter L,
wherein a first leg thereof when mounted in the vehicle (1) is a vertical leg (4.3) and located approximately in the plane of said rear glass (2) of the vehicle (1), and wherein a second leg thereof when mounted in the vehicle (1) is a horizontal leg (4.4) which is associated with a second end of the first leg (4.3) and located approximately horizontally, respectively, approximately in parallel with the plane of the road surface the vehicle (1) drives over, and wherein said first leg (4.3) is formed at the first end thereof with an entry surface (4.1), and said second leg (4.4) is formed at the free end thereof with an exit surface (4.2),
- a first light source (7) is arranged in the immediate vicinity of said entry surface (4.1) of the light guide (4), so that the light beam from the light source (7) enters through the entry surface (4.1) into the light guide (4) and afterwards, travels along the legs (4.3, 4.4) pursuant to the total internal reflection, and exits through the exit surface (4.2) performing a primary optical function of the brake light (2),
- said optical element (5) provided on at least one flat side of at least one of the legs (4.3, 4.4) of the light guide (4) can be lit by means of a second light source (8) to perform a second optical function of the brake light (2).

2. Additional brake light according to claim 1, **characterised in that** said first leg (4.3) can be inclined with regard to the vertical for an angle in the range of about ±30°, and/or that said second leg (4.4) can be inclined with regard to the horizontal for an angle in the range of about ±30°.

3. Additional brake light according to claims 1 and 2, **characterised in that** said first leg (4.3) and said second leg (4.4) of the light guide (4) are interconnected so that the internal angle (α) thereof preferably lies in the range of the obtuse angle.

4. Additional brake light according to any of the preceding claims, **characterised in that** at least one additional optical element (6) is provided on said exit surface (4.2) of the light guide (4).

5. Additional brake light according to claim 4, **characterised in that** said optical element (6) is formed as a holographic film which is attached by means of an adhesive agent to the respective surface of the light guide (4).

6. Additional brake light according to any of the preceding claims, **characterised in that** the optical elements (5, 6) are formed either as usual prismatic and/or lens optical element and/or as an etched structure and/or by use of different material (a diffusion material for example) by means of two-component injection technology and similar, and the combination of the aforementioned.

7. Additional brake light according to claims 1 to 6, **characterised in that** at least one of the optical elements (5, 6) is formed so as to extend continuously over the entire legth of the light guide (4).

8. Additional brake light according to claims 1 to 6, **characterised in that** at least one of the optical elements (5, 6) is formed so as to extend intermittently at least over a part of the length of the light guide (4), wherein said optical element (5, 6) is provided as a plurality of mutually more or less equally spaced sections of the optical element.

9. Additional brake light according to any of the preceding claims, **characterised in that** at least one of the optical elements (5, 6) can be formed in a manner to emit multi colour light.

10. Additional brake light according to any of the preceding claims, **characterised in that** said light source (7, 8) is selected as at least one light emitting diode (LED), preferably a plurality LED, arranged more or less equally along the light guide (4).

11. Additional brake light according to any of the preceding claims, **characterised in that** each LED of the second light source (8) is surrounded in a sense of a screen with light reflecting inclined walls (9) on all sides except the side facing said optical element (5) and, respectively, facing each said section (5.1) of the optical element.

12. Additional brake light according to any of the preceding claims, **characterised in that** an additional optical element, such as a lens, is attached to the light source (7, 8).

## Patentansprüche

1. Zusätzliches Bremslicht für ein Kraftfahrzeug, das im Bereich des Hecks des Fahrzeugs (1), vorzugsweise im Bereich der Heckscheibe (2) des Fahrzeugs (1) angeordnet werden kann, wobei ein zusätzliches Bremslicht (3) als ein Dickwandlichtleiter (4) mit mindestens einem darauf angeordneten optischen (5, 6) Element und mindestens eine Lichtquelle (7, 8) umfassend ausgebildet ist, wobei der Lichtleiter (4) eine Eintrittsfläche (4.1), die, wenn sie in dem Fahrzeug (1) montiert ist, einem Dach des Fahrzeugs (1) mindestens annähernd zugewandt ist, und eine Austrittsfläche (4.2), die der Richtung entgegengesetzt zur Fahrtrichtung des Fahrzeugs (1) mindestens annähernd zugewandt ist, umfasst, wobei der Lichtleiter (4) zwei Beine (4.3, 4.4) umfasst, wobei mindestens eines der Beine (4.3, 4.4) mindestens eine flache Seite umfasst, wobei das optische Element (5) auf der mindestens einen flachen Seite mindestens eines der Beine (4.3, 4.4) des Lichtleiters (4) bereitgestellt ist, und als eine holographische Folie (5) ausgebildet ist, **dadurch gekennzeichnet, dass**
- der Lichtleiter (4) in einem Querschnitt als ein Zweibeinelement im Sinne des Buchstaben L ausgebildet ist,
wobei ein erstes Bein davon bei Montage im Fahrzeug (1) ein vertikales Bein (4.3) und annähernd in der Ebene der Heckscheibe (2) des Fahrzeugs (1) positioniert ist, und wobei ein zweites Bein davon bei Montage im Fahrzeug (1) ein horizontales Bein (4.4) ist, das einem zweiten Ende des ersten Beins (4.3) zugeordnet und annähernd horizontal beziehungsweise annähernd parallel zur Ebene der Straßenoberfläche, über die das Fahrzeug (1) fährt, positioniert ist, und wobei das erste Bein (4.3) an dem ersten Ende davon mit einer Eintrittsfläche (4.1) ausgebildet ist und das zweite Bein (4.4) an dem freien Ende davon mit einer Austrittsfläche (4.2) ausgebildet ist,
- eine erste Lichtquelle (7) in der unmittelbaren Nähe der Eintrittsfläche (4.1) des Lichtleiters (4) angeordnet ist, so dass der Lichtstrahl von der Lichtquelle (7) durch die Eintrittsfläche (4.1) in den Lichtleiter (4) eintritt und danach aufgrund der Totalreflexion entlang der Beine (4.3, 4.4) fortschreitet und durch die Austrittsfläche (4.2) unter Ausführung einer primären optischen Funktion des Bremslichts (2) austritt,
- das auf mindestens einer flachen Seite mindestens eines der Beine (4.3, 4.4) des Lichtleiters (4) bereitgestellte optische Element (5) mittels einer zweiten Lichtquelle (8) beleuchtet werden kann, um eine zweite optische Funktion des Bremslichts (2) auszuführen.

2. Zusätzliches Bremslicht nach Anspruch 1, **dadurch gekennzeichnet, dass** das erste Bein (4.3) in Bezug auf die Vertikale über einen Winkel im Bereich von etwa ±30° geneigt werden kann, und/oder dass das zweite Bein (4.4) in Bezug auf die Horizontale über einen Winkel im Bereich von etwa ±30° geneigt werden kann.

3. Zusätzliches Bremslicht nach den Ansprüchen 1 und 2, **dadurch gekennzeichnet, dass** das erste Bein (4.3) und das zweite Bein (4.4) des Lichtleiters (4) so verbunden sind, dass der Innenwinkel (α) davon vorzugsweise im Bereich des stumpfen Winkels liegt.

4. Zusätzliches Bremslicht nach einem der vorhergehenden Ansprüche, **dadurch gekennzeichnet, dass** mindestens ein zusätzliches optisches Element (6) auf der Austrittsfläche (4.2) des Lichtleiters (4) bereitgestellt ist.

5. Zusätzliches Bremslicht nach Anspruch 4, **dadurch gekennzeichnet, dass** das optische Element (6) als eine holographische Folie ausgebildet ist, die mittels eines Klebstoffs an der entsprechenden Fläche des Lichtleiters (4) angebracht ist.

6. Zusätzliches Bremslicht nach einem der vorhergehenden Ansprüche, **dadurch gekennzeichnet, dass** die optischen Elemente (5, 6) entweder als gewöhnliches prismatisches und/oder linsenoptisches Element und/oder als eine geätzte Struktur und/oder durch Nutzung eines anderen Materials (beispielsweise eines Diffusionsmaterials) mittels Zweikomponentenspritzgießtechnologie und Ähnlichem sowie die Kombination der Vorgenannten ausgebildet sind.

7. Zusätzliches Bremslicht nach einem der Ansprüche 1-6, **dadurch gekennzeichnet, dass** mindestens eines der optischen Elemente (5, 6) so ausgebildet ist, dass es sich kontinuierlich über die gesamte Länge des Lichtleiters (4) erstreckt.

8. Zusätzliches Bremslicht nach einem der Ansprüche 1-6, **dadurch gekennzeichnet, dass** mindestens eines der optischen Elemente (5, 6) so ausgebildet ist, dass es sich intermittierend mindestens über einen Teil der Länge des Lichtleiters (4) erstreckt, wobei das optische Element (5, 6) als eine Vielzahl von wechselseitig mehr oder weniger gleich beabstandeten Abschnitten des optischen Elements bereitgestellt ist.

9. Zusätzliches Bremslicht nach einem der vorhergehenden Ansprüche, **dadurch gekennzeichnet, dass** mindestens eines der optischen Elemente (5, 6) in einer solchen Weise ausgebildet sein kann, dass es mehrfarbiges Licht emittiert.

10. Zusätzliches Bremslicht nach einem der vorhergehenden Ansprüche, **dadurch gekennzeichnet, dass** die Lichtquelle (7, 8) als mindestens eine lichtemittierende Diode (LED), vorzugsweise eine Mehrfach-LED, mehr oder weniger gleich entlang des Lichtleiters (4) angeordnet, ausgewählt ist.

11. Zusätzliches Bremslicht nach einem der vorhergehenden Ansprüche, **dadurch gekennzeichnet, dass** jede LED der zweiten Lichtquelle (8) in einem Sinne eines Schirms mit lichtreflektierenden geneigten Wänden (9) auf allen Seiten, mit Ausnahme der dem optischen Element (5) zugewandten Seite, ausgebildet und jeweils jedem Abschnitt (5.1) des optischen Elements zugewandt ist.

12. Zusätzliches Bremslicht nach einem der vorhergehenden Ansprüche, **dadurch gekennzeichnet, dass** ein zusätzliches optisches Element, beispielsweise eine Streuscheibe, an der Lichtquelle (7, 8) angebracht ist.

## Revendications

1. Feu de stop supplémentaire d'un véhicule automobile destiné à être monté à l'arrière du véhicule (1), de préférence dans la zone de la lunette arrière (2) du véhicule (1), un feu de stop supplémentaire (3) étant réalisé sous la forme d'un guide de lumière (4) épais avec au moins un élément optique (5, 6) disposé dessus et comprenant au moins une source de lumière (7, 8), le guide de lumière (4) présentant une surface d'entrée (4.1) qui, lorsqu'elle est montée dans le véhicule (1), est au moins approximativement tournée vers un toit du véhicule (1) et une surface de sortie (4.2) qui est au moins approximativement tournée vers la direction opposée au sens de marche du véhicule (1), le guide de lumière (4) comprenant deux jambes (4.3, 4.4) dont au moins l'une des jambes (4.3, 4.4) comprend au moins un côté plat, l'élément optique (5) étant prévu au moins sur le côté plat d'au moins une des jambes (4.3, 4.4) du guide de lumière (4), et formé comme un film holographique (5), **caractérisé en ce que**
- le guide de lumière (4) est formé dans une section transversale comme un élément à deux branches au sens de la lettre L,
une première branche lorsqu'il est monté dans le véhicule (1), étant une branche verticale (4.3) située approximativement dans le plan de ladite lunette arrière (2) du véhicule (1) et une seconde branche, lorsqu'il est monté dans le véhicule (1), étant une branche horizontale (4.4) associée à une seconde extrémité de la première branche (4.3) et située approximativement à l'horizontale, respectivement, approximativement en parallèle au plan de la surface de la route sur laquelle roule le véhicule (1) et dans lequel ladite première branche (4.3) est constituée à sa première extrémité d'une surface d'entrée (4.1) et ladite seconde branche (4.4) est constituée à son extrémité libre d'une surface de sortie (4.2),
- une première source de lumière (7) est disposée à proximité immédiate de ladite surface d'entrée (4.1) du guide de lumière (4), de sorte que le faisceau lumineux provenant de la source de lumière (7) entre par la surface d'entrée (4.1) dans le guide de lumière (4) puis se déplace le long des branches (4.3, 4.4) en suivant la réflexion interne totale et sort par la surface de sortie (4.2) réalisant une fonction optique primaire du feu de stop (2),
- ledit élément optique (5) prévu sur au moins un côté plat d'au moins une des branches (4.3, 4.4) du guide de lumière (4) peut être éclairé au moyen d'une seconde source de lumière (8) pour réaliser une seconde fonction optique du feu de stop (2).

2. Feu de stop additionnel selon la revendication 1, **caractérisé en ce que** ladite première branche (4.3) peut être inclinée par rapport à la verticale d'un angle d'environ ±30° et/ou **en ce que** ladite seconde branche (4.4) peut être inclinée par rapport à l'horizontale d'un angle d'environ ±30°.

3. Feu de stop additionnel selon les revendications 1 et 2, **caractérisé en ce que** ladite première branche (4.3) et ladite deuxième branche (4.4) du guide de lumière (4) sont interconnectées de sorte que leur angle interne (α) se situe de préférence dans la plage de l'angle obtus.

4. Feu de stop additionnel selon l'une des revendications précédentes, **caractérisé en ce qu'**au moins un élément optique additionnel (6) est prévu sur ladite surface de sortie (4.2) du guide de lumière (4).

5. Feu de stop additionnel selon la revendication 4, **caractérisé en ce que** ledit élément optique (6) est formé comme un film holographique fixé au moyen d'un agent adhésif à la surface respective du guide de lumière (4).

6. Feu de stop additionnel selon l'une quelconque des revendications précédentes, **caractérisé en ce que** les éléments optiques (5, 6) sont formés soit comme un élément optique prismatique et/ou à lentille conventionnel et/ou comme une structure gravée et/ou par l'utilisation d'un matériau différent (un matériau de diffusion, par exemple) au moyen d'une technologie d'injection à deux composants et similaire, et la combinaison des éléments précités.

7. Feu de stop additionnel selon les revendications 1 à 6, **caractérisé en ce qu'**au moins un des éléments optiques (5, 6) est formé de manière à s'étendre de manière continue sur toute la longueur du guide de lumière (4).

8. Feu de stop additionnel selon les revendications 1 à 6, **caractérisé en ce qu'**au moins un des éléments optiques (5, 6) est formé de manière à s'étendre par intermittence au moins sur une partie de la longueur du guide de lumière (4), dans lequel ledit élément optique (5, 6) est prévu comme plusieurs sections mutuellement plus ou moins également espacées de l'élément optique.

9. Feu de stop additionnel selon l'une des revendications précédentes **caractérisé en ce qu'**au moins l'un des éléments optiques (5, 6) peut être formé de manière à émettre une lumière multicolore.

10. Feu de stop additionnel selon l'une des revendications précédentes, **caractérisé en ce que** ladite source de lumière (7, 8) est choisie comme étant au moins une diode électroluminescente (LED), de préférence plusieurs LED disposées de manière plus ou moins égale le long du guide de lumière (4).

11. Feu de stop additionnel selon l'une des revendications précédentes, **caractérisé en ce que** chaque diode électroluminescente de la deuxième source de lumière (8) est entourée, au sens d'un tamis, de parois inclinées (9) réfléchissant la lumière sur tous les côtés, à l'exception du côté faisant face audit élément optique (5) et, respectivement, faisant face à chaque dite section (5.1) de l'élément optique.

12. Feu de stop additionnel selon l'une des revendications précédentes **caractérisé en ce qu'**un élément optique additionnel, tel qu'une lentille, est fixé à la source de lumière (7, 8).
